# EUROPEAN PATENT APPLICATION

(11) **EP 2 028 739 A1**
(43) Date of publication of application: **25.02.2009**
(21) Application number: 08252808.4
(22) Date of filing: 22.08.2008
(51) Int. Cl.: H02G 3/04, H02G 3/30

(54) **Mounting cable baskets and the like**

(30) Priority: 22.08.2007 GB 0716387
(71) Applicant: Lynn, Wesley Thompson, Stoke-on-Trent ST6 2AX (GB)
(72) Inventor: Lynn, Wesley Thompson, Stoke-on-Trent ST6 2AX (GB)
(74) Representative: Gallafent, Richard John

(57) **Abstract**

A cable basket (10) may be attached to a series of depending rods (13) by locating on each depending rod (13) a swivellable support member sized so that in one orientation it may be passed through a gap in the floor of the cable basket and so that when swivelled about the axis of the depending rod, it can no longer pass through the aperture in the floor of the cable basket. This considerably simplifies such installation, especially by a single person.

## Description

This invention relates to mounting cable baskets and the like in building construction.

In the construction of buildings it is commonplace to provide for electrical services to be delivered to various locations in area via cables. This is the case, for example, where a number of distributed electrical devices such as downlighters are installed in a large area ceiling or where signal cables are used to enable electronic signals to be distributed to outlook boxes as necessary. For simplicity, both in original installation and subsequent maintenance repair or upgrading work, rather than fixed cables individually at regularly spaced points, for example using cable clips or the like, use is often made of cable trays into which the cables are simply laid. The first installation step is accordingly that of installing a network of cable trays whereafter the cables are simply laid in them.

A customary way of installing cable trays, for example located a short distance below a ceiling, is to fix lengths of tray section to a large number of hanger rods each of which is fixed to the ceiling or for example to a girder structure. Cable trays are often perforated at intervals (and indeed may be constructed of regularly perforated material) and the rods are threaded and sized to pass through perforations in the trays. Accordingly each tray section is conventionally located in place by first threading a nut on to each of several depending rods, then offering up the section cable tray, guiding each of the rods through one of the perforations, and then holding the tray at intervals on to the rods by threading a further nut onto the bottom of the rod, usually with the interposition of a washer between the nut and the cable tray.

Such a mode of assembly is time consuming and requires at least two persons.

In recent years cable trays consisting of sections of flat perforate metal sheet material bent up at the edges have been replaced by so called by cable baskets. These consist of an elongate structure made of a number of parallel rods extending along the length of the cable basket and number of generally U-shaped bent rods welded at intervals to the elongate rods and running transversely. Such cable baskets are produced in standard lengths and can be easily cropped to the length desired using bolt cutters. Because the basket has much larger gaps in it, however, further holding brackets or the like have been used to affix the basket at regular intervals to a series of depending rods.

According to the present invention there is provided a method of affixing a cable basket to a series of depending rods which comprises locating on each depending rod a swivellable support member sized so that in one orientation it may be passed through a gap in the floor of the cable basket and so that when swivelled about the axis of the depending rod, it can no longer pass through the aperture in the floor of the cable basket.

Using this approach, installation is considerably simplified. On a series of depending rods the swivellable members are aligned in the direction of the intended tray, the tray offered up and the swivellable members then each swivelled to engage below a portion of the tray. They may then be fixed in position e.g. by tightening using a conventional nut and washer assembly.

Preferably the swivellable members have oppositely directed tags which, when the members are swivelled, engage elongate bar members forming part of the basket so that the relative positions of rod and basket are then fixed. It is particularly helpful if the tags are bent to define between them and the remainder of the swivellable member a gap of dimensions corresponding to the diameter of the rod members forming part of the cable basket.

According to a further feature of the present invention, there is provided a cable basket supporting bracket consisting of an elongate member having a generally central aperture adapted to fit over a support rod and, to either side of the aperture, a pair of oppositely directed tags extending from a support surface and preferably defining between the free end of each tag and the support surface a slot adapted to receive a cable basket elongate member.

The invention is illustrated by way of example with reference to a specific embodiment which is shown in the accompanying drawings. In the drawings:
Figure 1 is a plan view of a swivellable member;
Figures 2 and 3 are side and end views of the member shown in Figure 1, and
Figure 4 is a perspective view of a section of cable basket supported by the member shown in Figures 1 to 3 and on a reduced scale.

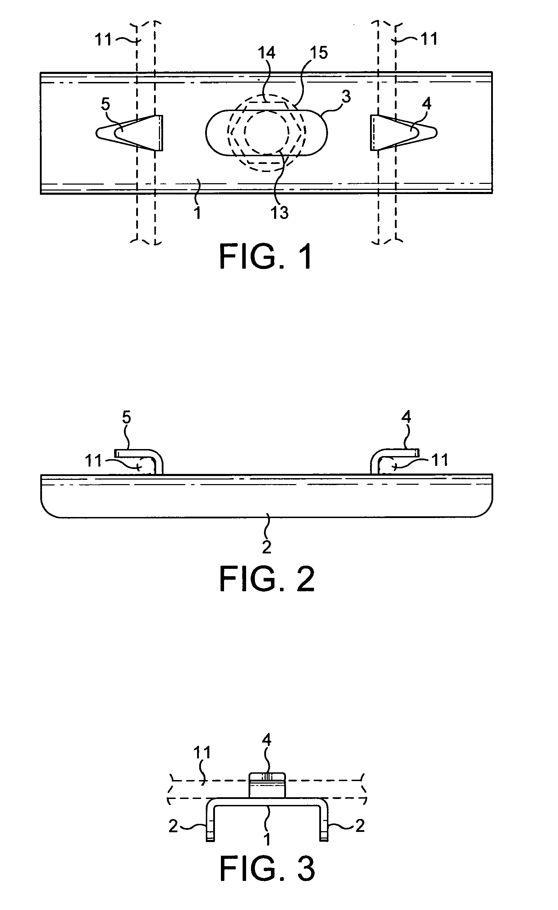

Referring first to Figures 1 to 3, the swivellable member shown consists of a bent and stamped piece of sheet steel. It is of generally inverted U section having a support floor 1 and two depending side walls 2. Punched in the centre of the member is an elongate slot 3. To either side there are punched out tags 4, 5 pointing in opposite directions. Each tag consists of a first portion bent out from floor 1 and extending essentially vertically from that floor and a second section running horizontally, the two horizontally running sections being oppositely directed as clearest seen in figure 2.

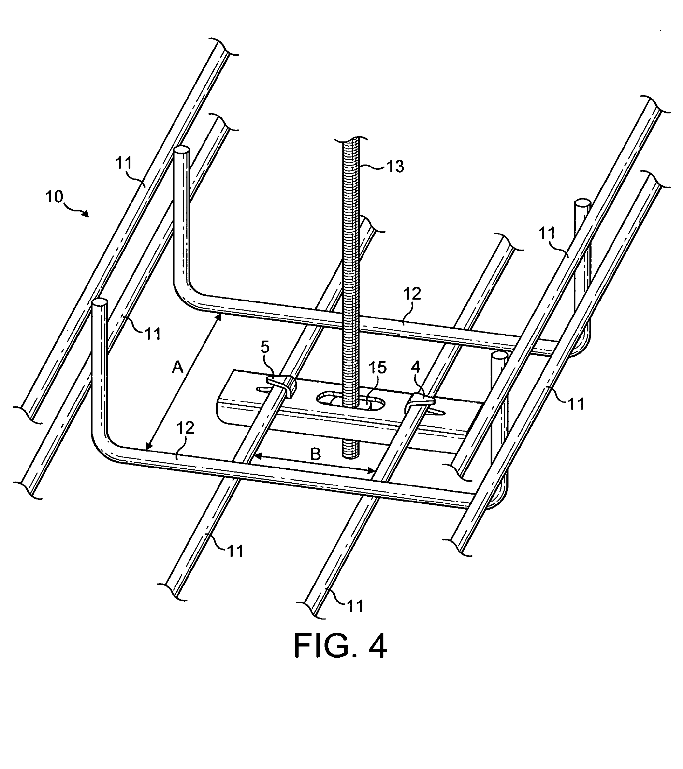

Figure 4 shows the member in use supporting a section of a cable basket generally indicated at 10. The basket 10 consists of a number of rods 11 which are held parallel to one another as shown by means regularly spaced U-shaped cross members 12. Members 11 and 12 are welded together at each crossing point.

Along the length of the cable basket 10, members 12 are spaced at regular intervals "A".

The two central rods 11 in the floor of the cable basket are separated so that the distance between them is "B", as shown on Figure 4. This distance corresponds to the distance defined by the outwardly facing surfaces of the two vertical portions of tags 4 and 5.

The length of the swivellable member shown in Figures 1 to 3 is less than the distance "A".

Each of the swivellable members is mounted on the bottom of a depending threaded rod 13 the upper end of which is fixed to a ceiling structure in known fashion. The rod 13 passes through slot 3 and the member is stopped from falling off the bottom of the rod by threading a nut 14 onto it with the interposition of a washer 15 between nut 14 and floor 1. The arrangement is shown in dashed lines in Figure 1.

When the basket is to be installed, a plurality of the swivellable members are fitted on to the bottoms of plurality of the rods 13 and they positioned to be at right angles to the position shown in Figure 4. Because the width of the swivellable member is less than dimension "B", and its length less than dimension "A", the section of cable basket can simply be raised to a position in which the floor of the cable basket lies above the swivellable member, and the swivellable member is then swivelled with the basket being lowered to a position such that the rods 11 come to lodge, as the swivelling is completed, between floor 1 and tags 4 and 5 respectively. The position of the two rods 11 is shown in dashed in lines in Figures 1 to 3.

If desired, the swivellable members may be secured against further swivelling by locating above the floor 1 a second nut 14 and washer 15 and, after the member has been swivelled into the position shown in Figure 4, tightening the two nuts towards one another to clamp floor 1 securely between the two washers.

An advantage of the approach illustrated in the drawings and disclosed above is that if it is desired for example to replace a cable basket with one of greater width, it is easy without difficulty to swivel the swivellable members so that the basket can be dropped down leaving the cables temporarily suspended and a fresh basket of greater width then offered up in replacement and secured in place by swivelling the swivellable members back.

## Claims

1. A method of affixing a cable basket (10) to a series of depending rods (13) which comprises locating on each depending rod (13) a swivellable support member sized so that in one orientation it may be passed through a gap in the floor of the cable basket and so that when swivelled about the axis of the depending rod, it can no longer pass through the aperture in the floor of the cable basket.

2. A method according to claim 1 wherein the swivellable members have oppositely directed tags(4,5) which, when the members are swivelled, engage elongate bar members (11) forming part of the basket (10) so that the relative positions of rod (13) and basket (10) are then fixed.

3. A method according to claim 2 wherein the tags (4,5) are bent to define between them and the remainder of the swivellable member a gap of dimensions corresponding to the diameter of the rod members (11) forming part of the cable basket (10).

4. A cable basket supporting bracket consisting of an elongate member having a generally central aperture (3) adapted to fit over a support rod (13) and, to either side of the aperture (3), a pair of oppositely directed tags (4,5) extending from a support surface (1) and preferably defining between the free end of each tag (4,5) and the support surface (1) a slot adapted to receive a cable basket elongate member (11).
